# EUROPÄISCHE PATENTSCHRIFT

(11) **EP 1 404 947 B1**
(45) Veröffentlichungstag und Bekanntmachung des Hinweises auf die Patenterteilung: **21.09.2005**
(21) Anmeldenummer: 02758287.3
(22) Anmeldetag: 01.07.2002
(51) Int. Cl.: F01K 23/10

(54) **VERFAHREN ZUM BETREIBEN EINER DAMPFKRAFTANLAGE SOWIE DAMPFKRAFTANLAGE ZUR DURCHFÜHRUNG DES VERFAHRENS**
METHOD FOR OPERATING A STEAM POWER PLANT AND STEAM POWER PLANT FOR CARRYING OUT SAID METHOD
PROCEDE POUR FAIRE FONCTIONNER UNE INSTALLATION MOTRICE A VAPEUR ET INSTALLATION MOTRICE A VAPEUR POUR METTRE EN OEUVRE CE PROCEDE

(30) Priorität: 12.07.2001 EP 01117051
(43) Veröffentlichungstag der Anmeldung: 07.04.2004
(73) Patentinhaber: SIEMENS AKTIENGESELLSCHAFT, 80333 München (DE)
(72) Erfinder: REISSIG, Sergej, 91058 Erlangen (DE)
(86) Internationale Anmeldenummer: PCT/EP2002/007243
(87) Internationale Veröffentlichungsnummer: WO 2003/006801

(56) Entgegenhaltungen:
- DE-A- 4 227 146
- DE-B- 1 133 186
- DE-C- 820 600
- US-A- 2 539 255
- US-A- 2 717 491

## Beschreibung

Die Erfindung bezieht sich auf ein Verfahren zum Betreiben einer Dampfkraftanlage mit einem Dampferzeuger und mit einer diesem zugeordneten Brennkammer, in die zusätzlich zu einem fossilen Brennstoff vorgewärmte Verbrennungsluft eingespeist wird. Sie betrifft weiterhin eine zur zur Durchführung des Verfahrens geeignete Dampfkraftanlage mit einem Dampferzeuger und mit einer diesem zugeordneten Brennkammer zur Verbrennung eines fossilen Brennstoffs, die eingangsseitig sowohl mit einer Brennstoffleitung als auch mit einer Frischluftleitung für Verbrennungsluft verbunden ist.

Eine Dampfturbine wird üblicherweise in einer Kraftwerksanlage zum Antrieb eines Generators oder in einer Industrieanlage zum Antrieb einer Arbeitsmaschine eingesetzt. Dazu wird der Dampfturbine als Strömungsmedium dienender Dampf zugeführt, der sich in der Dampfturbine arbeitsleistend entspannt. Nach seiner Entspannung gelangt der Dampf üblicherweise in einer der Dampfturbine nachgeschalteten Kondensator und kondensiert dort. Das Kondensat wird sodann als Speisewasser einem Dampferzeuger zugeführt und gelangt nach seiner Verdampfung erneut in die Dampfturbine, so daß ein geschlossener Wasser-Dampf-Kreislauf entsteht. Eine Anlage mit den dazu erforderlichen Komponenten, also insbesondere mit einer Dampfturbine und mit einem Dampferzeuger, wird auch als Dampfturbinen- oder Dampfkraftanlage bezeichnet.

Dem Dampferzeuger einer derartigen Dampfkraftanlage ist üblicherweise eine Brennkammer zugeordnet, in der ein Brennstoff verbrannt wird. Die bei der Verbrennung üblicherweise fossilen Brennstoffs entstehenden heißen Rauchgase werden dabei durch den Dampferzeuger geführt, wobei sie durch Wärmetausch mit dem im Wasser-Dampf-Kreislauf geführten Strömungsmedium zur Dampferzeugung genutzt werden.

Für die Verbrennung des Brennstoffs ist die Zuführung von Frischluft oder Verbrennungsluft in die dem Dampferzeuger zugeordnete Brennkammer erforderlich. Dazu ist die Brennkammer üblicherweise eingangsseitig zusätzlich zu einer Brennstoffleitung auch mit einer Frischluftleitung für die Verbrennungsluft verbunden. Über die Frischluftleitung wird die Verbrennungsluft in die Brennkammer gefördert, wobei das für die Einspeisung der Verbrennungsluft in die Brennkammer erforderliche vergleichsweise hohe Druckniveau über ein in die Frischluftleitung geschaltetes Fördergebläse bereitgestellt wird. Solche Anlage wird im Dokument DE-C- 820600 dargestellt.

Bei der Auslegung einer derartigen Dampfkraftanlage ist ein besonders hoher Anlagenwirkungsgrad bei der Umsetzung der im Brennstoff gespeicherten Energie in elektrische oder auf sonstige Weise nutzbare Energie ein übliches Auslegungsziel. Daher wird beispielsweise der Anlagenprozeß einer derartigen Dampfkraftanlage, insbesondere deren Betriebsparameter, derart vorgegeben oder gewählt, daß aus thermodynamischen Gründen ein besonders günstiger Energieübertrag erreichbar ist. Dazu wird unter anderem die in die Brennkammer einzuspeisende Verbrennungsluft üblicherweise auf ein vergleichsweise hohes Temperaturniveau vorgewärmt, da dies den Wirkungsgrad des eigentlichen Verbrennungsprozesses begünstigt. Eine derartige Vorwärmung der Verbrennungsluft kann beispielsweise innerhalb des eigentlichen Dampferzeugers vorgenommen werden, wobei der Wärmeinhalt des bei der Verbrennung erzeugten Rauchgases teilweise zur Luftvorwärmung genutzt wird.

Der Erfindung liegt die Aufgabe zugrunde, ein Verfahren zum Betreiben einer Dampfkraftanlage der oben genannten Art anzugeben, mit dem in einer Vielzahl von Betriebszuständen und insbesondere im Teillastbereich ein besonders hoher Anlagenwirkungsgrad erreichbar ist. Weiterhin soll eine zur Durchführung des Verfahrens besonders geeignete Dampfkraftanlage angegeben werden.

Bezüglich des Verfahrens wird diese Aufgabe erfindungsgemäß durch die Merkmale des Anspruchs 1 gelöst.

Die Erfindung geht dabei von der Überlegung aus, daß ein besonders hoher Anlagenwirkungsgrad auch bei variierenden Betriebszuständen erreichbar ist, indem eine möglichst große Vielzahl an Betriebsparametern möglichst bedarfsgerecht eingestellt wird. Gerade bei der Vorwärmung der Verbrennungsluft findet dies jedoch aufgrund des üblicherweise statischen Einbaus des Luftvorwärmers - beispielsweise im Dampferzeuger - nur in geringfügigem Umfang statt. Im Gegenteil kann dabei sogar eine Aufwärmung der Verbrennungsluft bei ihrer Vorwärmung auf ein Temperaturniveau erfolgen, das deutlich über dem aus thermodynamischen Gründen für den jeweiligen Betriebszustand der Anlage günstigsten Temperaturniveau liegt. Um dem entgegenzuwirken, ist nunmehr eine zumindest teilweise Nutzung des Energieinhalts der verdichteten und vorgewärmten Verbrennungsluft vor deren Eintritt in die Brennkammer vorgesehen. Dazu wird eine teilweise Entspannung der Verbrennungsluft vor ihrem Eintritt in die Brennkammer vorgenommen, wobei die Verbrennungsluft auf eine an den jeweiligen Betriebszustand der Anlage angepaßtes, aus thermodynamischen Gründen besonders günstiges Temperaturniveau abgekühlt wird. Durch die Entspannung wird die Verbrennungsluft somit auf für den jeweiligen Anlagenzustand besonders günstige Betriebsparameter für die Verbrennung gebracht, wobei ihr Energieinhalt zusätzlich noch teilweise genutzt wird.

Ein besonders hoher Anlagenwirkungsgrad ist dabei erreichbar, indem in vorteilhafter Weiterbildung die bei der Entspannung der vorgewärmten Verbrennungsluft gewonnene Arbeitsleistung zum Antrieb eines zur Verdichtung der Verbrennungsluft vorgesehenen Fördergebläses genutzt wird. Damit ist eine vergleichsweise direkte Bereitstellung der Antriebsenergie für das Fördergebläse ermöglicht. Im Gegensatz dazu erfolgt bei bekannten Anlagen der Antrieb des in die Frischluftleitung geschalteten Fördergebläses üblicherweise elektrisch. Die Bereitstellung der dafür erforderlichen Antriebsleistung erfolgt dabei über den der Dampfkraftanlage zugeordneten Generator. Somit erfolgt auch bei bisher bekannten Anlagen die Bereitstellung der für den Antrieb des Fördergebläses erforderlichen Antriebsleistung im wesentlichen aus dem Energieinhalt des Brennstoffs, wobei jedoch eine Vielzahl von jeweils verlustträchtigen Energieumwandlungsschritten bis hin zur Erzeugung elektrischer Energie im Generator erforderlich sind, die letztlich wieder in Antriebsenergie für das Fördergebläse umgewandelt wird. Durch den vergleichsweise direkten Antrieb des Fördergebläses über die bei der Entspannung der vorgewärmten Verbrennungsluft gewonnene Arbeitsleistung kann somit nunmehr eine Anzahl von verlustträchtigen Energieumwandlungsstufen eingespart werden, was für sich bereits eine Steigerung des Gesamtwirkungsgrads der Anlage bedingt.

Um auch bei variierenden Betriebszuständen der Dampfkraftanlage ein aus thermodynamischen Gründen besonders günstiges Temperaturniveau bei der Einspeisung der Verbrennungsluft in die Brennkammer einzuhalten, wird in vorteilhafter Weiterbildung ein Betriebsparameter für die Entspannung der Verbrennungsluft anhand eines für die Temperatur der der Brennkammer zuströmenden Verbrennungsluft charakteristischen Kennwerts eingestellt. Beispielsweise kann als Betriebsparameter für die Entspannung der Verbrennungsluft die bei der Entspannung entzogene Arbeitsleistung abhängig von einem Temperatur-Istwert eingestellt werden. Damit kann sichergestellt werden, daß die der Brennkammer zuströmende Verbrennungsluft auch bei variierenden Lastzuständen der Anlage immer ein ausreichend hohes Temperaturniveau für eine thermodynamisch günstige Verbrennung des Brennstoffs aufweist.

Die Vorwärmung der Verbrennungsluft kann an einer Vielzahl geeigneter Stellen innerhalb der Dampfkraftanlage vorgenommen werden. Vorteilhafterweise wird die Vorwärmung der Verbrennungsluft jedoch innerhalb des Dampferzeugers und somit über Rauchgas aus der Brennkammer vorgenommen.

In alternativer oder zusätzlicher vorteilhafter Ausgestaltung wird die Vorwärmung der Verbrennungsluft über von einer zugeordneten Gasturbine abströmendes Rauchgas vorgenommen. Auf diese Weise ist in der Art einer mit einer Gasturbinenanlage kombinierten Dampfturbinenanlage eine Nutzung der im aus der Gasturbine abströmenden Abgas noch mitgeführten Wärme durch Einspeisung in den Prozeß der Dampfkraftanlage ermöglicht. Diese Wärme wird dabei vorteilhafterweise einerseits zur Luftvorwärmung und andererseits über die Entspannung der vorgewärmten Verbrennuhngsluft zum Antrieb des in die Frischluftleitung geschalteten Fördergebläses genutzt, so daß der Energieinhalt des der Brennkammer des Dampferzeugers zugeführten Brennstoffs mehr oder weniger ausschließlich und fokussiert zur Erzeugung von elektrischer Energie oder Arbeitsleistung über die zugeordnete Dampfturbine genutzt werden kann.

Bei einer derartigen, mit einer Gasturbinenanlage kombinierten Dampfkraftanlage wird in weiterer vorteilhafter Ausgestaltung im aus der Gasturbine abströmenden Abgas noch mitgeführte Wärme weiterhin zur Vorwärmung von Speisewasser für den Dampferzeuger genutzt.

Bezüglich der Dampfkraftanlage wird die genannte Aufgabe durch die Merkmale des Anspruchs 6 gelöst. gelöst.

Vorteilhafterweise treibt dabei die Luftturbine ein dem Luftvorwärmer in der Frischluftleitung vorgeschaltetes Fördergebläse an. Dies kann beispielsweise dadurch erfolgen, daß die Luftturbine und das Fördergebläse, gegebenenfalls unter Zwischenschaltung eines geeigneten Getriebes, auf einer gemeinsamen Welle angeordnet sind. Gerade bei einer derartigen Schaltung entfallen die verlustträchtigen Zwischenstufen bei der Energieumwandlung, bei denen die Wärme aus der Verbrennungsluft erst zur Dampf- und dann zur Stromerzeugung verwendet wird, wenn das Fördergebläse elektrisch angetrieben ist.

In weiterer vorteilhafter Ausgestaltung ist das Fördergebläse dabei als Luftverdichter ausgebildet, der einen Ausgangsdruck von etwa 4 bis 5 bar erzeugen kann. Gerade in Kombination mit der zusätzlich vorgesehenen Aufheizung der verdichteten Luft, vorzugsweise auf eine Temperatur von etwa 500°C - 550°C, ist dabei eine besonders wirksame Nutzung des in der verdichteten und vorgewärmten Luft mitgeführten Energieinhalts ermöglicht.

Um eine Einstellung eines Betriebsparameters für die Luftturbine, insbesondere der der vorgewärmten Verbrennungsluft durch Entspannung entzogenen Arbeitsleistung, bedarfsgerecht an den jeweiligen Betriebszustand der Anlage zu ermöglichen, ist eine der Luftturbine zugeordnete Regeleinrichtung vorteilhafterweise eingangsseitig mit einem an der Frischluftleitung angeordneten Temperaturfühler verbunden.

Der Luftvorwärmer ist in vorteilhafter Weiterbildung innerhalb des Dampferzeugers angeordnet, so daß eine Beheizung der der Brennkammer zuströmende Verbrennungsluft über Rauchgas aus der Brennkammer erfolgen kann. Dazu ist der Luftvorwärmer vorteilhafterweise primärseitig in den Rauchgasstrom aus der Brennkammer geschaltet.

Die Dampfkraftanlage eignet sich auch besonders für ein flexible und kompakte Kombination mit einer Gasturbinenanlage.

Dabei ist in besonders vorteilhafter Ausgestaltung eine Nutzung von im Abgas der aus der Gasturbine mitgeführten Restwärme zur Vorwärmung der Verbrennungsluft für die Brennkammer der Dampfkraftanalge vorgesehen. Vorteilhafterweise ist dazu der Luftvorwärmer primärseitig in einen einer Gasturbine nachgeschalteten Rauchgaskanal geschaltet.

In weiterer vorteilhafter Ausgestaltung wird bei einer derartigen Kombination einer Gasturbinenanlage mit einer Dampfkraftanlage die Restwärme im Abgas aus der Gasturbine noch zur Vorwärmung von Speisewasser für den Dampferzeuger genutzt. Dazu ist zweckmäßigerweise ein dem Dampferzeuger zugeordneter Speisewasservorwärmer primärseitig in dem der Gasturbine nachgeschalteten Rauchgaskanal geschaltet.

Die mit der Erfindung erzielten Vorteile bestehen insbesondere darin, daß durch die zumindest teilweise Entspannung der Verbrennungsluft nach ihrer Vorwärmung und vor ihrem Eintritt in die Brennkammer einerseits besonders günstige Betriebsparameter für die Verbrennungsluft, insbesondere ein günstiges Druckniveau und ein günstiges Temperaturniveau, für den jeweiligen Betriebszustand der Anlage eingestellt werden können. Andererseits kann dabei auch der in der vorgewärmten Verbrennungsluft mitgeführte Energieinhalt vergleichsweise direkt und in den Wirkungsgrad steigernder Weise für den Anlagenprozeß genutzt werden. Eine derartige Dampfkraftanlage ist somit zum Einsatz als Dampfkraftwerk, also in Verbindung mit einer Dampfturbine, besonders geeignet, da dort der Wirkungsgrad üblicherweise ein besonders wichtiges Auslegungskriterium ist.

Weiterhin ist ein derartiges Konzept besonders vorteilhaft bei der Verfeuerung vergleichsweise stark verschlackender Brennstoffe, wie beispielsweise Braunkohle, Steinkohle oder Ölschiefer. Bei einer zunehmenden Verschlackung der Brennkammer verschlechtert sich nämlich die Wärmeübertragung, und das im Dampferzeuger fühlbare Wärmeangebot verschiebt sich zu dessen Ausgang hin, so daß ein in diesem Bereich angeordneter Luftvorwärmer vergleichsweise erhöhter Beheizung ausgesetzt ist. Gerade in einem derartigen Fall kann sich somit die Temperatur der der Brennkammer zuströmenden Verbrennungsluft noch weiter erhöhen, was wiederum eine Verstärkung des Verschlackungsprozesses bewirkt. Gerade in diesem Fall kann somit eine arbeitsleistende Entspannung der vorgewärmten Verbrennungsluft deren Temperaturniveau beim Einströmen in die Brennkammer auf besonders betriebsgerecht angepaßte Werte zurückführen, wobei zudem eine wirkungsgradsteigernde Nutzung der der Verbrennungsluft entzogenen Arbeitsleistung vorgenommen werden kann.

Eine derartig ausgestaltete Dampfkraftanlage kann zudem vergleichsweise kompakt und einfach ausgeführt sein, wobei bei einfacher Regelbarkeit insbesondere Anzapfungen an der Dampfturbine oder eine Vorwärmstrecke gänzlich entfallen können.

Ausführungsbeispiele der Erfindung werden anhand einer Zeichnung näher erläutert. Darin zeigen:
- Figur 1: schematisch eine Dampfkraftanlage, und
- Figur 2: schematisch eine mit einer Gasturbinenanlage kombinierte Dampfkraftanlage.

Gleiche Teile sind in beiden Figuren mit denselben Bezugszeichen versehen.

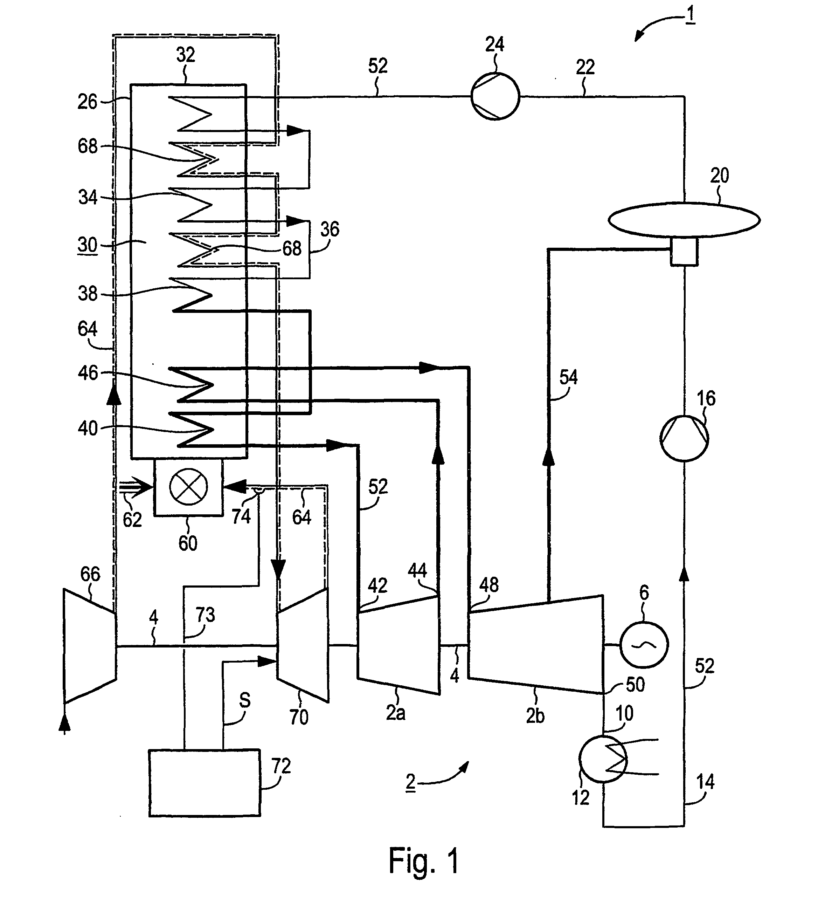

Die Dampfkraftanlage 1 gemäß Figur 1 ist zur Erzeung elektrischer Energie vorgesehen und umfaßt dazu eine Dampfturbine 2, die über eine Turbinenwelle 4 mit einem Generator 6 verbunden ist. Im Ausführungsbeispiel umfaßt die Dampfturbine 2 einen Hochdruckteil 2a und einen Niederdruckteil 2b. Die Dampfturbine 2 ist somit zweistufig ausgeführt. Alternativ kann die Dampfturbine 2 aber auch lediglich eine oder mehrere, insbesondere drei, Druckstufen umfassen.

Die Dampfturbine 2 ist ausgangsseitig über eine Dampfleitung 10 an einen Kondensator 12 angeschlossen. Der Kondensator 12 ist über eine Leitung 14, in die eine Kondensatpumpe 16 geschaltet ist, mit einem Speisewasserbehälter 20 verbunden. Der Speisewasserbehälter 20 ist ausgangsseitig über eine Zuführungsleitung 22, in die eine Speisewasserpumpe 24 geschaltet ist, mit einer in einem Dampferzeuger 26 angeordneten Heizflächenanordnung 30 verbunden.

Die Heizflächenanordnung 30 umfaßt eine Anzahl von auch als Economizer bezeichneten Vorwärmheizflächen 32, 34, die ausgansseitig über eine Überströmleitung 36 mit einer Verdampferheizfläche 38 verbunden sind. Die Verdampferheizfläche 38 kann dabei als Durchlaufverdampfheizfläche oder als Naturumlaufverdampferheizfläche ausgebildet sein. Dazu kann die Verdampferheizfläche 38 in bekannter Weise an eine im Ausführungsbeispiel nicht dargestellte Wasser-Dampf-Trommel zur Bildung eines Umlaufs angeschlossen sein.

Die Verdampferheizfläche 38 ist mit einem ebenfalls im Dampferzeuger 26 angeordneten Hochdrucküberhitzer 40 verbunden, der ausgangsseitig an den Dampfeinlaß 42 des Hochdruckteils 2a der Dampfturbine 2 angeschlossen ist. Der Dampfauslaß 44 des Hochdruckteils 2a der Dampfturbine 2 ist über einen Zwischenüberhitzer 46 an den Dampfeinlaß 48 des Niederdruckteils 2b der Dampfturbine 2 angeschlossen. Dessen Dampfauslaß 50 ist über die Dampfleitung 10 mit dem Kondensator 12 verbunden, so daß ein geschlossener Wasser-Dampf-Kreislauf 52 entsteht.

Der in Figur 1 dargestellte Wasser-Dampf-Kreislauf 52 ist somit aus lediglich zwei Druckstufen aufgebaut. Er kann aber aus lediglich einer oder mehreren, insbesondere drei, Druckstufen aufgebaut sein, wobei im Dampferzeuger 26 in bekannter Weise weitere Heizflächen angeordnet sein können. Der Niederdruckteil 2b der Dampfturbine 2 ist zudem über eine Anzapfdampfleitung 54 zur bedarfsweisen Kondensatentgasung mit dem Speisewasserbehälter 20 verbunden.

Dem Dampferzeuger 26 ist eine fossilbefeuerte Brennkammer 60 zugeordnet. Die Brennkammer 60 ist über eine Brennstoffzuleitung 62 mit einem fossilen Brennstoff und über eine Frischluftleitung 64 mit Verbrennungsluft für die Verbrennung beaufschlagbar. Um ein für die Förderung der Verbrennungsluft in die Brennkammer 60 ausreichendes Druckniveau sicherzustellen, ist in die Frischluftleitung 64 ein Fördergebläse 66 geschaltet. Das Fördergebläse 66 ist dabei als Luftverdichter ausgebildet, der ausgangsseitig einen Betriebsdruck der verdichteten Luft von etwa 4 bis 5 bar erzeugt. Weiterhin ist bei der Dampfkraftanlage 1 eine Vorwärmung der Verbrennungsluft vor ihrem Eintritt in die Brennkammer 60 vorgesehen, um damit ein aus thermodynamischen Gründen für einen hohen Wirkungsgrad bei der Verbrennung ausreichendes Temperaturniveau in der Brennkammer 60 sicherzustellen. Dazu ist in die Frischluftleitung 64 ein im Ausführungsbeispiel zweistufig ausgebildeter Luftvorwärmer 68 geschaltet, der im Dampferzeuger 26 angeordnet und somit primärseitig vom Rauchgas aus der Brennkammer 60 beheizt ist.

Die Dampfkraftanlage 1 ist für einen besonders hohen Anlagenwirkungsgrad auch bei wechselnden Betriebsbedingungen ausgelegt. Für einen hohen Anlagenwirkungsgrad ist dabei eine bedarfsweise, zumindest teilweise Entspannung der Verbrennungsluft vor ihrem Eintritt in die Brennkammer 60 vorgesehen. Dazu ist in die Frischluftleitung 64 zwischen den Luftvorwärmer 68 und die Brennkammer 60 eine Luftturbine 70 geschaltet. Die Luftturbine 70 ist dabei ebenso wie das Fördergebläse 66 gemeinsam mit dem Hochdruckteil 2a und dem Niederdruckteil 2b auf der Turbinenwelle 4 angeordnet. Die Luftturbine 70 treibt somit über die Turbinenwelle 4 das Fördergebläse 66 mit an.

Der Luftturbine 70 ist eine Regeleinrichtung 72 zugeordnet, die bedarfsweise und betriebspunktabhängig Stellwerte S für eine Betriebsparameter der Luftturbine 70, beispielsweise für die der Verbrennungsluft bei ihrer Entspannung in der Luftturbine 70 zu entziehende Arbeitsleistung, vorgibt. Eingangsseitig ist die Regeleinrichtung 72 über eine Signalleitung 73 mit einem an der Frischluftleitung 64 angeordneten Temperaturfühler 74 verbunden.

Beim Betrieb der Dampfkraftanlage 1 wird die in die Brennkammer 60 einströmende Verbrennungsluft im Fördergebläse 66 verdichtet und anschließend im Luftvorwärmer 68 vorgewärmt. Die nach der Vorwärmung charakteristischen Betriebsparameter der Verbrennungsluft, wie ihr Druck und ihr Temperaturniveau, hängen dabei wesentlich vom aktuellen Betriebszustand des Dampferzeugers 26 ab. Beispielsweise kann die aus dem Luftvorwärmer 68 abströmende Verbrennungsluft einen Druck von etwa 4,8 bis 5,2 bar und eine Temperatur von etwa 500 °C aufweisen. Derartige Betriebsparameter sind jedoch nicht notwendigerweise günstig für die Verbrennung in der Brennkammer 60. Insbesondere kann das Temperaturniveau der Verbrennungsluft deutlich höher als ein aus thermodynamischen Gründen wünschenswertes Temperaturniveau sein.

Um dieses möglicherweise zu hohe Temperaturniveau wirkungsgradsteigernd zu nutzen, wird die aus dem Luftvorwärmer 68 abströmende Verbrennungsluft vor ihrer Zufuhr in die Brennkammer 60 zunächst in der Luftturbine 70 arbeitsleistend zumindest teilweise entspannt. Dazu wird die Verbrennungsluft über die Luftturbine 70 geführt, wobei sie diese antreibt, und wobei sich ein Druck von etwa 1,2 bar und eine Temperatur von etwa 300 °C in der Verbrennungsluft einstellen. Durch die teilweise Entspannung in der Luftturbine 70 wird die Verbrennungsluft somit auf besonders günstige Betriebsparameter für eine Verbrennung in der Brennkammer 60 gebracht, wobei zudem noch eine Nutzung der bei der Entspannung gewonnenen Arbeitsleistung ermöglicht ist. Die Luftturbine 70 treibt dabei im Ausführungsbeispiel das Fördergebläse 66 an, so daß ein vergleichsweise direkter Antrieb des Fördergebläses 66 unter Vermeidung einer unnötig hohen Anzahl von verlustträchtigen Zwischenstufen bei der Energieumwandlung erreicht ist.

Um auch bei variierenden Betriebszuständen ein für die Verbrennung besonders günstiges Parameterniveau in der Verbrennungsluft einzuhalten, überwacht die Regeleinrichtung 72 über den Temperaturfühler 74 regelmäßig die Betriebsparameter der der Brennkammer 60 zuströmenden Verbrennungsluft. Dabei soll insbesondere sichergestellt werden, daß trotz der Entspannung der Verbrennungsluft in der Luftturbine 70 in jedem Betriebszustand ein ausreichend hohes Temperaturniveau der Verbrennungsluft für eine aus thermodynamischen Gründen günstige Verbrennung in der Brennkammer 60 eingehalten ist. Bedarfsweise führt die Regeleinrichtung 72 der Luftturbine 70 Sollwerte für eine Beeinflussung der der Verbrennungsluft bei ihrer Entspannung entzogenen Arbeitsleistung zu. Dabei können beispielsweise Drosselorgane auf einen betriebspunktabhängigen günstigen Stellwert eingestellt werden.

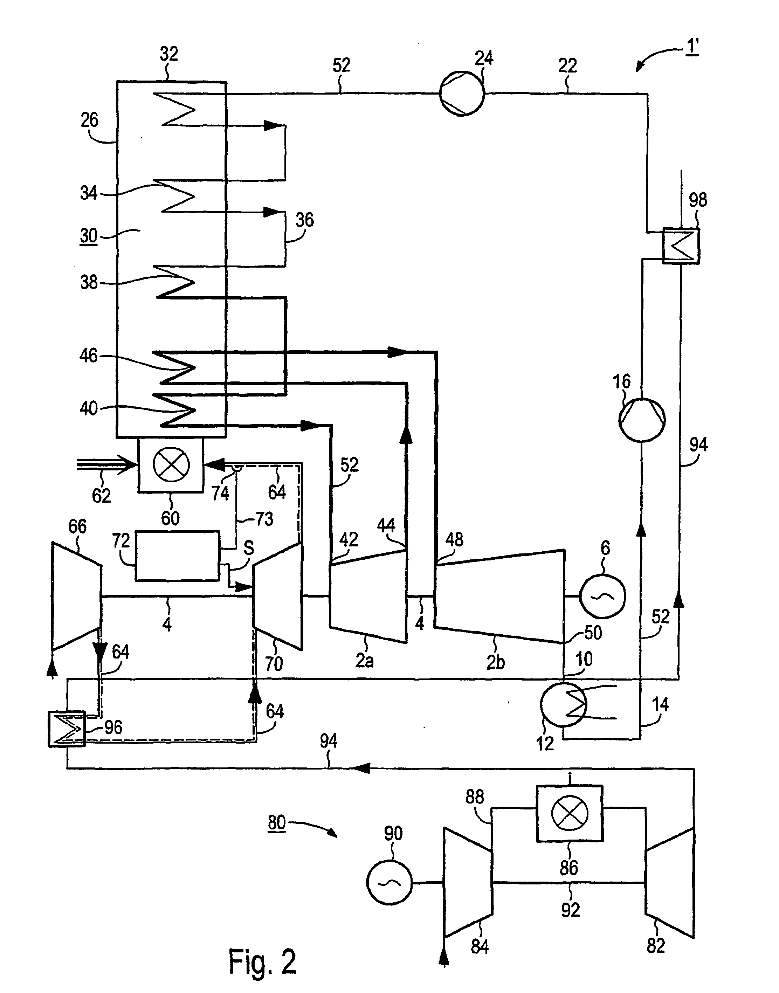

Auch die Dampfkraftanlage 1' gemäß Figur 2 ist für eine Vorwärmung der verdichteten Verbrennungsluft für die Brennkammer 60 mit anschließender arbeitsleistender Teilentspannung in einer Luftturbine 70 ausgelegt. Die Dampfkraftanlage 1' gemäß Figur 2 ist jedoch für eine kombinierte Aufstellung mit einer zugeordneten Gasturbinenanlage 80 ausgelegt. Diese umfaßt eine Gasturbine 82 mit angekoppeltem Luftverdichter 84 und eine der Gasturbine 82 vorgeschaltete Brennkammer 86, die an eine Druckluftleitung 88 des Luftverdichters 84 angeschlossen ist. Die Gasturbine 82 und der Luftverdichter 84 sowie ein zugeordneter Generator 90 sitzen auf einer gemeinsamen Welle 92.

Im Ausführungsbeispiel gemäß Figur 2 ist die Kopplung der Gasturbinenanlage 80 an die Dampfkraftanlage 1' derart vorgesehen, daß aus der Gasturbine 82 abströmendes Abgas zur Luftvorwärmung und zur Speisewasservorwärmung für die Dampfkraftanlage 1' genutzt wird. Dazu ist in einem der Gasturbine 82 nachgeschalteten Rauchgaskanal 94 primärseitig ein als Luftvorwärmer 96 für die Verbrennungsluft der Dampfkraftanlage 1' ausgestalteter Wärmetauscher geschaltet. Der Luftvorwärmer 96 ist dabei sekundärseitig in die Frischluftleitung 64 der Dampfkraftanlage 1' geschaltet, so daß ein Wärmeübertrag von aus der Gasturbine 82 abströmenden Abgas oder Rauchgas auf die im Fördergebläse 66 verdichtete Verbrennungsluft für die Brennkammer 60 ermöglicht ist. Die Luftturbine 70 ist dabei zwischen dem Luftvorwärmer 96 und der Brennkammer 60 in die Frischluftleitung 64 geschaltet, so daß dort eine zumindest teilweise Entspannung der im Luftvorwärmer 96 vorgewärmten Frischluft ermöglicht ist.

Für eine noch weitergehende Nutzung der im aus der Gasturbine 82 abströmenden Rauchgas mitgeführten Restwärme ist in den Rauchgaskanal 94 zudem noch ein als Speisewasservorwärmer 98 ausgestalteter Wärmetauscher primärseitig geschaltet. Der Speisewasservorwärmer 98 ist dabei sekundärseitig in die Zuführungsleitung 22 der Dampfkraftanlage 1' geschaltet.

## Patentansprüche

1. Verfahren zum Betreiben einer Dampfkraftanlage (1, 1') mit einem Dampferzeuger (26) und mit einer diesem zugeordneten Brennkammer (60, 86), in die zusätzlich zu einem fossilen Brennstoff vorgewärmte Verbrennungsluft eingespeist wird, wobei die Verbrennungsluft nach ihrer Vorwärmung und vor ihrer Einspeisung in die Brennkammer (60, 86) zumindest teilweise arbeitsleistend entspannt wird,
**dadurch gekennzeichnet, dass** die bei der Entspannung entzogene Arbeitsleistung anhand eines für die Temperatur der der Brennkammer (60, 86) zuströmenden Verbrennungsluft charakteristischen Kennwerts eingestellt wird.

2. Verfahren nach Anspruch 1, bei dem ein zur Verdichtung der Verbrennungsluft vorgesehenes Fördergebläse (66) über die bei der Entspannung der vorgewärmten Verbrennungsluft gewonnene Arbeitsleistung angetrieben wird.

3. Verfahren nach einem der Ansprüche 1 oder 2, bei dem die Vorwärmung der Verbrennungsluft innerhalb des Dampferzeugers (26) vorgenommen wird.

4. Verfahren nach einem der Ansprüche 1 oder 2, bei dem die Vorwärmung der Verbrennungsluft über von einer Gasturbine (82) abströmendes Rauchgas vorgenommen wird.

5. Verfahren nach Anspruch 4, bei dem über das aus der Gasturbine (82) abströmende Rauchgas Speisewasser für den Dampferzeuger (26) vorgewärmt wird.

6. Dampfkraftanlage (1, 1') mit einem Dampferzeuger (26) und mit einer diesem zugeordneten Brennkammer (60, 86) zur Verbrennung eines fossilen Brennstoffs, die eingangsseitig sowohl mit einer Brennstoffleitung (62) als auch mit einer Frischluftleitung (64) für Verbrennungsluft verbunden ist, wobei in die Frischluftleitung (64) zusätzlich zu einem Luftvorwärmer (68, 96) eine diesem nachgeschaltete Luftturbine (70) geschaltet ist,
**gekennzeichnet durch** eine der Luftturbine (70) zugeordnete Regeleinrichtung (72), die eingangsseitig mit einem an der Frischluftleitung (64) angeordneten Temperaturfühler (74) verbunden ist.

7. Dampfkraftanlage (1, 1') nach Anspruch 6, bei der die Luftturbine (70) ein dem Luftvorwärmer (68, 96) in der Frischluftleitung (64) vorgeschaltetes Fördergebläse (66) antreibt.

8. Dampfkraftanlage (1, 1') nach Anspruch 7, bei der das Fördergebläse (66) als Luftverdichter zur Erzeugung eines Ausgangsdrucks von etwa 4 bis 5 bar ausgelegt ist.

9. Dampfkraftanlage (1, 1') nach einem der Ansprüche 6 bis 8, deren Luftvorwärmer (68, 96) innerhalb des Dampferzeugers (26) angeordnet ist.

10. Dampfkraftanlage (1, 1') nach einem der Ansprüche 6 bis 9, deren Luftvorwärmer (68, 96) primärseitig in einen einer Gasturbine (82) nachgeschalteten Rauchgaskanal (94) geschaltet ist.

11. Dampfkraftanlage (1, 1') nach Anspruch 10, bei der ein dem Dampferzeuger (26) zugeordneter Speisewasservorwärmer (98) primärseitig in den der Gasturbine (82) nachgeschalteten Rauchgaskanal (94) geschaltet ist.

## Claims

1. Method for operating a steam power plant (1, 1') comprising a steam generator (26) and a combustion chamber (60, 86) associated therewith, into which pre-warmed combustion air is fed in addition to a fossil fuel, the combustion air being at least partially released in an output-producing manner after being pre-warmed and before being introduced into the combustion chamber (60, 86), wherein the output extracted during release is set on the basis of a characteristic value for the temperature of the combustion air flowing toward the combustion chamber (60, 86).

2. Method according to Claim 1, wherein a pneumatic conveyor (66) provided for compressing the combustion air is driven via the output gained when releasing the pre-warmed combustion air.

3. Method according to one of Claims 1 or 2, wherein the combustion air is pre-warmed within the steam generator (26).

4. Method according to one of Claims 1 or 2, wherein the combustion air is pre-warmed via flue gas flowing from a gas turbine (82).

5. Method according to Claim 4, wherein feed water is pre-warmed for the steam generator (26) via the flue gas flowing from the gas turbine (82).

6. Steam power plant (1, 1') comprising a steam generator (26) and a combustion chamber (60, 86) associated therewith for the combustion of a fossil fuel, which is connected on the inlet side to both a fuel pipe (62) and a fresh air pipe (64) for combustion air, whereby in addition to an air pre-warmer (68, 96) an air turbine (70) mounted downstream therefrom is mounted in the fresh air pipe (64), wherein a regulating device (72) assigned to the air turbine (70) is connected on the inlet side to a temperature sensor (74) arranged on the fresh air pipe (64).

7. Steam power plant (1, 1') according to Claim 6, wherein the air turbine (70) drives a pneumatic conveyor (66) mounted upstream from the air pre-warmer (68, 96) in the fresh air pipe (64).

8. Steam power plant (1, 1') according to Claim 7, wherein the pneumatic conveyor (66) is designed as an air compressor that can generate an output pressure of approximately 4 to 5 bar.

9. Steam power plant (1, 1') according to one of Claims 6 to 8, whose air pre-warmer (68, 96) is arranged within the steam generator (26).

10. Steam power plant (1, 1') according to one of Claims 6 to 9, whose air pre-warmer (68, 96) is mounted on the primary side in a flue gas duct (94) downstream of a gas turbine (82).

11. Steam power plant (1, 1') according to Claim 10, wherein a feed water pre-warmer (98) assigned to the steam generator (26) is mounted on the primary side in the flue gas duct (94) downstream of the gas turbine (82).

## Revendications

1. Procédé pour faire fonctionner une installation (1, 1') motrice à vapeur comprenant un générateur (26) de vapeur et une chambre de combustion (60, 86) qui lui est associée et dans laquelle on envoie, en plus d'un combustible fossile, de l'air de combustion préchauffé, l'air de combustion étant, après son préchauffage et avant son envoi dans la chambre de combustion (60, 86), détendu au moins en partie en fournissant du travail,
**caractérisé en ce que** l'on règle la puissance de travail soutirée par la détente au moyen d'un indice caractéristique de la température de l'air de combustion allant à la chambre de combustion (60, 86).

2. Procédé suivant la revendication 1, dans lequel on entraîne une soufflante (66) véhiculant l'air de combustion par la puissance de travail obtenue lors de la détente de l'air de combustion préchauffé.

3. Procédé suivant l'une des revendications 1 ou 2, dans lequel on effectue le préchauffage de l'air de combustion dans le générateur (26) de vapeur.

4. Procédé suivant l'une des revendications 1 ou 2, dans lequel on effectue le préchauffage de l'air de combustion par du gaz d'échappement sortant d'une turbine (82) à gaz.

5. Procédé suivant la revendication 4, dans lequel on préchauffe l'eau d'alimentation du générateur (26) de vapeur par le gaz d'échappement sortant de la turbine (82) à gaz.

6. Installation (1, 1') motrice à vapeur comprenant un générateur (26) de vapeur et une chambre de combustion (60, 86) qui lui est associée pour la combustion d'un combustible fossile qui communique du côté de l'entrée tant avec un conduit (62) pour du combustible qu'avec un conduit (64) pour de l'air frais pour obtenir de l'air de combustion, une turbine (70) à air étant montée en plus d'un préchauffeur (68, 96) d'air en aval de celui-ci dans le conduit (64) pour de l'air frais,
**caractérisée par** un dispositif (72) de réglage associé à la turbine (70) à air et relié du côté de l'entrée à une chambre (74) de température montée sur le conduit (64) pour de l'air frais.

7. installation (1, 1') motrice à vapeur suivant la revendication 6, dans laquelle la turbine (70) à air entraîne une soufflante (66) montée en amont du préchauffeur (68, 96) d'air dans le conduit (64) pour de l'air frais.

8. Installation (1, 1') motrice à vapeur suivant la revendication 7, dans laquelle la soufflante (66) est conçue sous la forme d'un compresseur d'air pour la production d'une pression de sortie d'environ 4 à 5 bars.

9. Installation (1, 1') motrice à vapeur suivant l'une des revendications 6 à 8, dont le préchauffeur (68, 96) d'air est disposé dans le générateur (26) de vapeur.

10. Installation (1, 1') motrice à vapeur suivant l'une des revendications 6 à 9, dont le préchauffeur (68, 96) d'air est monté du côté primaire dans un canal (94) de gaz d'échappement monté en aval d'une turbine (82) à gaz.

11. Installation (1, 1') motrice à vapeur suivant la revendication 10, dans laquelle un préchauffeur (98) d'eau d'alimentation associé au générateur (26) de vapeur est monté du côté primaire dans le canal (94) pour les gaz d'échappement en aval de la turbine (82) à gaz.
